# EUROPEAN PATENT APPLICATION

(11) **EP 3 893 524 A1**
(43) Date of publication of application: **13.10.2021**
(21) Application number: 20908465.6
(22) Date of filing: 13.01.2020
(51) Int. Cl.: H04W 4/02, H04W 4/20

(54) **HIERARCHICAL ARCHITECTURE OF A SECURITY SYSTEM FOR RESTRICTED AREAS OF A SITE**

(71) Applicant: Gabliya, Yuriy Aleksandrovich, Moscow, 121069 (RU)
(72) Inventor: CHIVILYOV, Yakov Vladimirovich, Moscow 129327 (RU); KOTULEV, Yuriy Aleksandrovich, Moskovskaya obl. Lobnya 141730 (RU); GABLIYA, Yuriy Aleksandrovich, 121069 (RU)
(74) Representative: Plasseraud IP
(86) International application number: PCT/RU2020/000009
(87) International publication number: WO 2021/145784

(57) **Abstract**

The claimed invention relates to systems for the prevention of offenses and detection of offenders in controlled areas of the terrain, and also to systems for monitoring and accounting for the use of weapons. It can be used in the work of law enforcement agencies, within the framework of combining the work of duty operatives and automated subsystems of security services. The technical problem lies in the construction of hierarchical levels of the security system in the controlled areas of the terrain. Provision of organized and reliable operation of the security system is achieved. The specified technical result is achieved by the fact that contactless collection of information from stationary devices for generating audio-video information is carried out by means of a mobile device for generating audio-video information located on a moving object. An array of data is formed, consisting of information from the stationary devices for generating audio-video information and a the mobile device for generating audio-video information, which is transmitted in real time to a system for recognizing and analyzing the received received on the middle level with automated information processing, or, in the case of the loss of communication with the said system for recognition and analysis of the information received, to a remote server of the lower level of collecting primary information. Face recognition and search for matches with faces from the database of the recognition system and analysis of the received information on the middle level is carried out. The results obtained are transmitted to the mobile device for forming audio-video image. Audio analysis of information is performed and a text block of audio data is formed. A protocol of the results of the analysis is formed, which is sent to the upper level with decision making through a secure bidirectional data transmission channel. The resulting protocol is divided by means of a system of filters into separate files, each of which is combined according to the category of common features. The files are analyzed using the system for analyzing and predicting the development of the situation. Based on the results of contactless information retrieval from the geolocation system of the service weapon and the fixed electronic unit installed in the service weapon body and forming the weapon use protocol, an array of data on the use of weapons is formed, which is sent to the service weapon accounting system on the control level. An analysis of the legality of the use of weapons is carried out. The received data is transferred to the system for analyzing and predicting of the development of the situation on the top level for filtration.

## Description

The claimed invention relates to systems for the prevention of offenses and detection of offenders in controlled areas of the terrain, and also to systems for monitoring and accounting for the use of weapons. It can be used in the work of law enforcement agencies, within the framework of combining the work of duty operatives and automated subsystems of security services.

At present, an intelligent network of technical means of detection (TCO) is known from the prior art with the possibility of forming virtual means of detection for combining alarm messages (RU 2637400 C1, 04.12.2017), which consists of a CPU and a plurality of TCO, each of which contains a radio modem, an alarm sensor based on one of the physical principles and a communication module. The CPU consists of a central processing unit with a graphic monitor, the radio modem and the communication module. All TCOs are connected to each other and to the CPU into a peer-to-peer radio network, made with the possibility of automatic restructuring of information transmission routes according to the criterion of the best quality of radio communication. All communication modules of each TCO are interconnected to each other and with the CPU using an interface line.

A universal alarm system (RU 81357U1 10.03.2009) is also known from the prior art, designed to detect offenders when they attempt to enter a controlled area of the terrain. The proposed utility model can be used to ensure the protection of temporary military and air bases, parking areas and checkpoints of military units in a poorly controlled territory, in the face of opposition from an armed enemy, terrorist groups; places of temporary storage of tangible assets, military equipment, weapons; cable routes, overpasses, oil pipelines, etc. (if it is impossible or inexpedient to install stationary security equipment), countering theft; places of likely overcoming the boundary of the object to enhance the reliability of the stationary security complex; directions of the enemy's probable movement (roads, trails, ravines, etc.) in areas of armed conflicts, including border ones, during special operations.

However, these complexes have a complex design when deploying the system at a facility, and besides, they are not intended to control the use of weapons and control the security services.

The technical problem of the claimed solution lies in the construction of hierarchical levels of the security system in the controlled areas of the terrain.

The technical result is to ensure the organized and reliable operation of the security system.

The claimed technical result is achieved by creating a hierarchical architecture of the security system of controlled areas of the terrain, including the lower level with primary data collection, containing: a remote server, stationary devices for generating audio and video information, a mobile device for generating audio and video information, located on a mobile object equipped with an ESD and tracker device comprising a radio frequency identifier, while said specified tracker device and ESD are connected to each other by a bidirectional data transmission channel, and the mobile device for generating audio-video information is connected by separate bidirectional data transmission channels to the tracker device, ESD and the remote server; in addition, the mobile device for generating audio-video information is configured to receive information contact-free from stationary devices for generating audio-video information at the moment of being directly near these devices; the middle level with automated information processing, connected by a bidirectional data transmission channel with the lower level with primary data collection and containing a system for recognizing and analysis of the information received; the upper level with decision making, connected by a data transmission channel to the lower level with primary data collection and a bi-directional channel with the middle level with automated information processing and containing a system for filtering, analyzing and predicting the development of the situation based on the information received from the middle level with automated information processing; in this case, the security system of the controlled areas of the terrain is configured to code data transmission channels both within the levels and during the interaction of these levels with each other, and also to delimit data access at the hardware level; the control level comprising a service weapon accounting system that checks the use of weapons based on information received from the lower level with primary data collection based on the results of contact-free information retrieval from the geolocation system built into the ESD and a permanent electronic unit installed in the DESHO housing and forming a protocol for the use of weapons.

An additional feature is that the mobile device for generating audio and video image comprises a module for receiving and transmitting Wi-Fi, 3G, Bluetooth, a high-resolution video camera, infrared backlight of a video camera, a flashlight lamp, GPRS / GLONASS module.

An additional feature is that the mobile device for generating audio-video image is configured to maintain a history of records and duplicate the transmitted information into the built-in secure memory.

An additional feature is that infrared backlight is configured to automatic switching on to balance the influence of weather conditions and insufficient backlight.

An additional feature is that the electroshock weapon comprises a display, an identification system, and a video recording device configured to automatically switch on when the weapon is taken safety off, transmit a signal to switch on and transmit a streaming video signal to the service weapon accounting system of the control level and recording into the built-in memory.

An additional feature is that the electroshock weapon identification system is a radio frequency identification system configured to transmitting an identifier search signal when the trigger is pressed during firing and blocking the shot if the detected identification code does not match the electroshock weapon code.

An additional feature is that the automated information processing system is configured to retrieve faces, car numbers, street names of the required areas, to build a route for a moving object.

An additional feature is that the face recognition system is configured to retrieve faces from the stream and compare the retrieved faces with faces from the database and configured to transfer photographs of the wanted persons to the mobile audio-video recording device, when a match is found with the face from the database of the system of face recognition.

The technical result is also due to the method for controlling the security system of the controlled areas of the terrain and including the stages at which the contactless collection of information from stationary devices for generating audio-video information is carried out by means of the mobile device for generating audio-video information located on the moving object. An array of data is formed, consisting of information from stationary devices for generating audio-video information and the mobile device for generating audio-video information, which is transmitted in real time mode to the system for recognizing and analyzing the received information on the middle level with automated information processing, or, in case of loss of communication with said system for recognizing and analysis the information received, to the remote server of the lower level for collecting primary information. They carry out face recognition and search for intersections with faces from the database of the system for recognizing and analysis of the received information on the middle level. The obtained recognition results are transmitted to the mobile device for forming audio-video image. An audio analysis of the received information is performed and a text block of the received audio data is formed. A protocol of the results of the analysis is formed, which is sent to the upper level with decision making through the secure bidirectional data transmission channel. The resulting protocol is divided by means of a system of filters into separate files, each of which is combined according to the category of common features. These files are analyzed by means of a system for analyzing and predicting the development of the situation. Based on the results of contactless information retrieval from the ESD geolocation system and the permanent electronic unit installed in the DESHO housing and forming a weapon use protocol, an array of data on the use of weapons is formed, which is fed into the control level service weapon accounting system. An analysis of the legality of the use of weapons is carried out. The received data is transferred to the system of filtration, analysis and predicting of the development of the situation at the top level.

The declared system for controlling the use of weapons and managing the work of the security service is explained using the drawings:

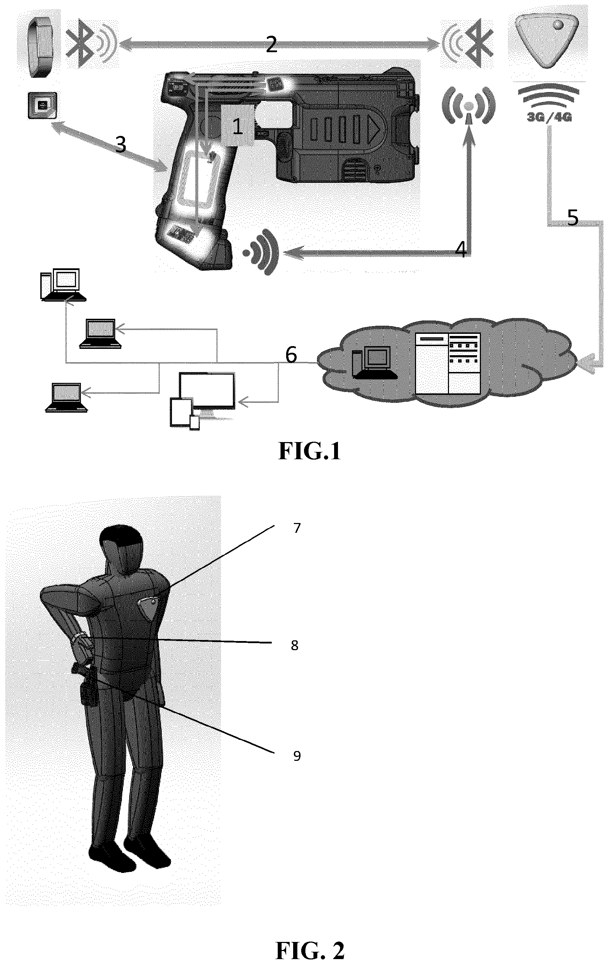

FIG. 1 is diagram of the operation of the claimed invention, where:
   1 is two-way communication for the exchange of commands within the device via the I2C protocol;
   2 is two-way communication via the Bluetooth protocol for receiving and transmitting data and commands between the tracker device and the receive-transmit module of said device;
   3 is NFC identification system;
   4 is two-way communication via Wi-Fi;
   5 is streaming two-way data transmission over 3G;
   6 is communication for providing access, according to the level, via the Internet for viewing the stored data and their subsequent processing.
FIG. 2 shows the main parts of the level with primary data collection:
   7 is mobile device for generating audio-video information;
   8 is tracker device;
   9 is electroshock device.

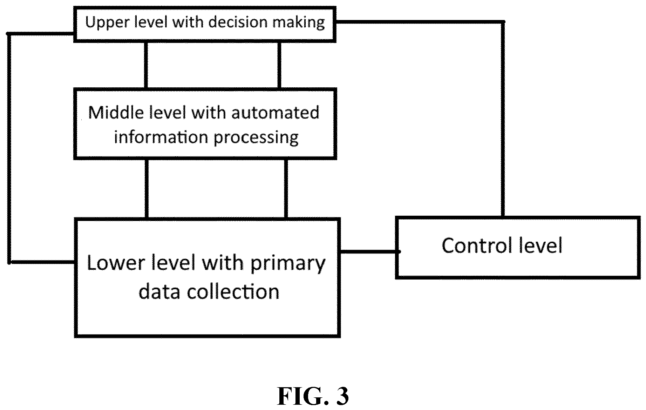

Figure 3 is block diagram of the interaction of the levels.

The hierarchical architecture of the security system of controlled areas of the terrain consists of:
1. the lower level with primary data collection
2. the middle level with automated information processing
3. the upper level with decision making
4. the control level

### Lower level with primary data collection

Level - privates, sergeants and junior officers.

This level includes stationary devices for generating audio-video information from built-in sensors or nearby automatic surveillance systems. Information from which is transmitted to the mobile device for generating audio-video information located on the mobile object, which may be, for example, a security officer. Said employee is equipped with the tracker device comprising a radio frequency identifier and a service weapon, such as an electroshock weapon.

In the process of being on duty by a security officer, data from stationary devices for generating audio-video information by means of the mobile device for generating audio-video information are broadcast in real time, or transferred in parts (if there is a temporary stable communication system) to the remote server of this level, or directly into the system for recognizing and analysis the information received on the middle level with automated information processing.

Hybrid options are possible, which are transfer of streaming data in the presence of a stable connection and recording to portable storage when the connection is broken.

Contactless information retrieval from stationary devices is carried out in two ways:
1) the stationary devices for generating audio-video images are configured to form a data transmission channel, for example, via Wi-Fi, with the mobile device for generating audio-video images;
2) the system sends the geo-location data of the employee and, through the geolocation systems, his (her) position is automatically tracked, identifies stationary devices for generating audio-video images connected to the network and provides access to them. After gaining access, the employee receives a notification on the mobile device for forming audio-video image or a mobile phone, after which he (she) has the ability to track the situation through them or redirect the generated data array to the system for recognizing and analyzing the received information on the middle level with automated information processing.

In addition to data from the stationary devices, data is also collected about the environment around the security officer, through the mobile device for audio and video information, about the state of the employee himself (herself), and a history of records about the state of his (her) technical means is kept by means of the tracker device. All data is collected without human intervention (from built-in sensors) and at this stage the security officer has the ability to view part of the information, according to the access level.

The service weapon or equipment has a personal binding block. The unit allows the use of service weapons or special equipment only for an employee who has a radio frequency identifier, made, for example, with NFC technology (short-range communication device). If he (she) loses his (her) RFID or his (her) weapon is stolen, it cannot be used.

Said identifier has a special code, the verification of which by the service weapon identification system allows it to be used.

The mobile device for forming an audio-video image (7) is a complex device that includes the following units:
- unit for receiving and transmitting Wi-Fi, 3G, Bluetooth;
- high definition video camera;
- infrared backlight of the video camera;
- a backlight flashlight;
- GPRS / GLONASS unit.

The transmit-receive module is the core of the wearable system. It collects data from all devices, maintains a history of records and transmits and receives all data from other devices.

The transmit-receive module broadcasts two types of information: streaming video and discrete data (additional). All transmitted information is duplicated in the built-in protected memory.

The video stream can be broadcast in two ways:
- over 3G in the presence of a stable cellular connection,
- via Wi-Fi if connected.

In this case, the device must support full-duplex communication and at the same time be both a Wi-Fi point and a connected device. This is necessary so that when working, for example, in a room where there is Wi-Fi, connection to the building's internal network in advance is established and transmitting is performed through it.

The mobile device (7) is configured to operate for up to 12 hours without recharging, ensuring the reception and transmission of data throughout the entire period of operation of the device, and also with the possibility of periodically determining its own coordinates with subsequent transmission using the 3G/Wi-Fi receive-transmit module.

The camera is configured to record video in 720p resolution at a recording rate of 60 frames per second. The recording is simultaneously broadcast to the remote server of the automated reporting system and duplicated to the cloud and to the built-in memory card.

Infrared backlight is designed to automatic switching on for balancing weather conditions and the influence of insufficient backlight.

The Bluetooth module is designed to receive data from a tracker device to monitor the employee's status. Time-stamped data is also transferred to the cloud server of the automated reporting system.

The tracker device is made in a dust- and moisture-resistant case and contains a radio frequency identifier and/or heart rate monitor, accelerometer, thermometer, galvanic skin response sensor, with water resistance IP68.

All data is transmitted discretely (once a second or a few minutes) via Bluetooth. In the presence of LCD, the display shows orders or instructions coming from the upper level with decision making or the middle level with automated information processing.

The radio frequency identifier (NFC key tag) contains an identification code that allows access when using a service weapon, built-in memory containing data on the use of service weapons, an employee's personal code, device number, a Bluetooth module through which data is transmitted, which is configured to set the frequency time range of information transmission.

Service weapons, in particular electroshock weapons, comprises an LCD display that displays statistics on the use of the device, duplication of orders and instructions from the management. The following information can also be displayed on the display: the serial number of the service weapon, the date of its release, power, time and number of uses, the current and remaining battery charge (in the case of an electroshock weapon).

The service weapon also comprises a radio frequency identification (RFID) system and a video recording device.

The radio frequency identification system of the service weapon is configured to transmit the radio frequency identifier search signal when the trigger is pressed during the execution of a shot and to block the shot if the identification code detected by the said system does not match the code of the service weapon.

The video recording device switches on automatically when the service weapon is switched on (taking the safety off). After that, the device transmits a signal about switching on to the receive-transmit module of the mobile device using a repeater for forming audio-video image and then to the accounting system of the service weapon on the control level.

In a similar way, a streaming video signal is transmitted to the remote server on this level or the system for recognizing and analyzing the information received on the middle level with automated information processing.

At the same time, the mobile device for generating audio-video image is configured to analyze for finding persons who are especially dangerous criminals by retrieving faces from the array of data obtained and comparing them with data in a limited database containing information about especially dangerous citizens.

### Middle level with automated information processing

Level - privates, sergeants and junior officers.

The primary data received when keeping the watch and transmitted to the recognition and analysis system undergoes automated processing of the audio and video data array to systematize the information.

The transmitted data array, consisting of information from the stationary devices for generating audio-video information and the mobile device for generating audio-video information, which is broadcast in real time mode, passes through the face recognition system. The system allows selecting faces from the stream and find a match with faces from the database. Thus, the search for missing people and people on the wanted list is greatly facilitated.

There is a selection of faces, car numbers, street names of the required areas. The route of the moving object is built using geodata.

The face recognition subsystem is configured to retrieve faces from the stream and compare the retrieved faces with faces from the database, and also is configured to transfer photographs of wanted people to the mobile device for generating audio-video information, when a match is found with a face from the database of the face recognition subsystem.

In particular, the resulting video image is passed through a system for searching people by photo, searching using artificial intelligence algorithms, searching for missing persons, analyzing elderly people for pronounced diseases, etc.

Audio analysis recognizes speech and creates a text file. A protocol of the results of the analysis is formed, which is sent to the upper level with decision making through the secure bidirectional data transmission channel.

All data is stored in encrypted form, communication channels are protected by encryption, data access levels are strictly delimited at the hardware level.

### Upper level with decision making

### Level - senior officers

The obtained protocols are divided by means of the system of filters into separate files, each of which is combined according to the category of common features, according to which a summary report is ultimately generated. Consolidated report allows to draw a conclusion about the efficiency of the unit / department / service operation, and also to keep statistics on offenses in the subordinate territory.

By means of the system for analysis and predicting of the development of the situation, the obtained data are analyzed and the forecast of the development of situations is revealed. The result of which is the adoption of decisions on preventive measures and prevention of critical situations in the given territory or in the subordinate unit. That is, the given level is configured to filter and analyze the data obtained, and also to predict situations and generate consolidated report.

### Control level

Based on the results of the contactless receipt of information from the geolocation system of service weapons and a permanent electronic unit installed in the body of service weapons and forming a protocol for the use of weapons, an array of data on the use of weapons is formed, which, through the mobile device for generating audio-video information, enters the accounting system of service weapons on the control level. The analysis of the legality of the use of weapons is carried out, and the obtained data is transmitted to the system of filtration, analysis and predicting of the development of the situation on the upper level.

Due to the fact that the service weapon has a personal binding unit, which allows the use of the service weapon only by an employee who has a tracker device with a built-in radio frequency identifier.

In this case, the electronic unit is made non-removable and is discreetly installed in a functionally necessary part or part of the weapon. Reading of information is carried out contactless, recharging of the power supply of the circuit occurs mechanically from the operation of the weapon or due to the electromagnetic field of the electronic parts of the weapon.

The tracker device can be made in the form of a bracelet, or a ring, or a glove. The bracelet can also contain an LCD display.

When the device is in operation, a usage log is kept, which is recorded in nonvolatile memory.

The red information is formed as a data array containing information on the number of shots and places of use, as well as personal information of the owner.

Some types of weapons (combat, rifled) can be equipped with an instant notification system of use, which will send a signal about each episode of use to the service weapon accounting system and then to the system of analyzing and predicting of the situation development on the upper level for filtering.

## Claims

1. Hierarchical architecture for managing the security system of controlled areas of the terrain, including:
- the lower level with primary data collection, comprising: a remote server, stationary devices for generating audio and video information, a mobile device for generating audio and video information located on a mobile object equipped with a service weapon and a tracker device containing a radio frequency identifier,
at the same time, the indicated tracker device and service weapon are connected to each other by a bidirectional data transmission channel,
and the mobile device for generating audio-video information is connected by separate bidirectional data transmission channels to the tracker device, the service weapon and the remote server;
wherein the mobile device for generating audio-video information is configured to receive information contact-free from stationary devices for generating audio-video information at the time of its immediate proximity to said devices;
- the middle level with automated information processing, connected by a bidirectional data transmission channel to the lower level with primary data collection and comprising a system for recognizing and analyzing the information received;
- the upper level with decision making, connected by a data transmission channel with the lower level with primary data collection and a bi-directional channel with the middle level with automated information processing and containing a system for filtering, analyzing and predicting the development of the situation based on the information received from the middle level with automated information processing;
in this case, the security system of the controlled areas of the terrain is configured to code data transmission channels both within the levels and during the interaction of these levels with each other, and also with the possibility of delimiting access to data made at the hardware level;
- a control level comprising a service weapon accounting system checking the use of weapons based on information received from the lower level with primary data collection based on the results of contactless information retrieval from the geolocation system built into the service weapon and a permanent electronic unit installed in the service weapon body and forming a weapons use protocol.

2. The system according to claim 1, wherein the mobile device for forming an audio-video image comprises a Wi-Fi, 3G, Bluetooth receiving and transmitting module, a high-resolution video camera, an infrared video camera backlight, a backlight lamp, a GPRS/GLONASS module.

3. The system according to claim 2, wherein the mobile device for forming audio-video image is configured to maintain a history of records and duplicate the transmitted information in the built-in secure memory.

4. The system of claim. 2, wherein the infrared backlight is configured to automatic switching on to balance the influence of weather conditions and insufficient backlight.

5. The system according to claim 1, wherein the electroshock weapon comprises a display, an identification system and a video fixation device configured to switch on in automatic mode when the weapon is taken safety off, transmitting a signal to switch it on and to transmit a streaming video signal to the service weapon accounting system on the control level and to record in the built-in memory.

6. The system according to claim 5, wherein the electroshock weapon identification system is a radio frequency identification system configured to transmit an identifier search signal when the trigger is pressed during a shot and blocking the shot if the detected identification code does not match the electroshock weapon code.

7. The system according to claim 1, wherein the automated information processing system is configured to identify faces, car numbers, street names of the required areas, building a route for a moving object.

8. The system according to claim 1, wherein the face recognition system is configured to retrieve faces from the stream and to compare the retrieved faces with faces from the database and is configured to transfer photographs of the wanted persons to the mobile audio-video recording device, when a match is found with face from the database of the face recognition system.

9. A method for managing the security system of controlled areas of the terrain comprising the stages at which:
- contactless collection of information from stationary devices for generating audio-video information is carried out by means of the mobile device for generating audio-video information, located on the moving object;
- a data array is formed, consisting of information from the stationary devices for generating audio-video information and the mobile device for generating audio-video information, which is transmitted in real time mode to the system for recognizing and analyzing the information received on the middle level with automated information processing, or, in case of loss of communication with said system for recognizing and analyzing the information received, to the remote server on the lower level for collecting primary information;
- face recognition is carried out and search for matches with faces from the database of the system for recognizing and analysis of the received information on the middle level,
- the obtained recognition results are transmitted to the mobile device for forming audio-video image;
- audio analysis of the received information is performed and a text block from the received audio data is formed;
- a protocol of the results of the analysis is formed, which is sent to the upper level with decision making via a secure bidirectional data transmission channel;
- the resulting protocol is divided by means of a system of filters into separate files, each of which is combined according to the category of common features;
- said files are analyzed by means of the system for analyzing and predicting the development of the situation;
- based on the results of non-contact information retrieval from the system of the service weapon geolocation and the permanent electronic unit installed in the service weapon body and forming the weapon use protocol, an array of data on the use of weapons is formed, which is sent into the service weapon accounting system on the control level;
- analyze the legality of the use of weapons;
- the received data is transferred to the system of filtration, analysis and predicting of the development of the situation on the upper level.
